# FASCICULE DE BREVET EUROPEEN

(11) **EP 1 367 845 B1**
(45) Date de publication et mention de la délivrance du brevet: **11.01.2006**
(21) Numéro de dépôt: 03291289.1
(22) Date de dépôt: 28.05.2003
(51) Int. Cl.: H04Q 7/32, H04M 15/22

(54) **Procédé de contrôle d'admission pour une transmission de données entre un serveur et un terminal mobile, à un moment privilégié de la journée, pour réduire la durée de transmission.**
Verfahren der Zeitzuordnung für die Datenübertragung zwischen einem Server und einem Mobilendgerät, an einem privilegierten Tageszeitpunkt, um die übertragungszeit zu reduzieren.
Method of admission control for data transmission between a server and a mobile terminal, at an advantageous time of the day, to reduce transmission time.

(30) Priorité: 31.05.2002 FR 0206710
(43) Date de publication de la demande: 03.12.2003
(73) Titulaire: FRANCE TELECOM, 75015 Paris (FR)
(72) Inventeur: Mourrain, Christine, 38000 Grenoble (FR); Berge, Jean-Michel, 38330 Saint-Nazaire-Les-Eymes (FR)
(74) Mandataire: Hassine, Albert

(56) Documents cités:
- EP-A- 1 109 369
- EP-A- 1 191 461
- US-A1- 2002 002 047
- PATENT ABSTRACTS OF JAPAN vol. 2002, no. 08, 5 août 2002 (2002-08-05) & JP 2002 123446 A (STAR ALPHA KK), 26 avril 2002 (2002-04-26)

## Description

L'invention concerne le domaine des téléchargements de données entre un terminal mobile et un serveur distant.

Des services de téléchargement de données (fichiers son encodés en MP3, courriers électroniques, messages SMS, ou autres) sont proposés à des abonnés, habilités à communiquer avec un serveur pour recevoir ou envoyer de telles données, à partir d'un terminal mobile. De telles communications mettent généralement en oeuvre un réseau local (public ou privé) propre à communiquer avec le terminal mobile (par exemple de type GSM ou GPRS), et un réseau distant propre à communiquer avec le serveur (par exemple un réseau ATM ou IP), le réseau local et le réseau distant étant reliés l'un à l'autre par une passerelle.

Les coûts de communication pour le téléchargement des données peut varier en fonction :
- du choix d'un opérateur local propriétaire du réseau local,
- de la durée estimée de la communication des données en fonction d'un taux d'occupation du réseau local d'un opérateur choisi et du taux d'occupation du réseau distant, et
- du volume de données échangées.

En particulier lorsque des abonnés sont en déplacement dans un pays étranger, les réseaux local et distant peuvent être espacés d'un ou plusieurs fuseaux horaires. Ainsi, une heure "creuse" du réseau local (avec un taux d'occupation relativement faible et/ou un coût tarifaire relativement bas), peut correspondre à une heure "*pleine*" du réseau distant (avec un taux d'occupation relativement élevé), ce qui peut entraîner une durée et un coût global de communication intolérables pour l'abonné.

Le document JP2002123446 défini un système de communication de données par satellite. Les positions géographiques respectives du réseau local et du réseau distant sont en décalage horaire si bien que par exemple le serveur transmettra de jour sur le réseau local alors que l'utilisateur recevra de nuit sur le réseau distant. L'instant et la durée de transmission des données sont calculés en fonction de la congestion moyenne du trafic à différents moments de la journée et en fonction de la vitesse de transmission des données.

La présente invention vient améliorer la situation.

Elle propose à cet effet un procédé defini selon les revendications 1 à 14.

Ainsi, un utilisateur du terminal mobile communiquant via un réseau local peut optimiser et gérer ses durées et, de là, ses coûts de communication, s'il lui est proposé une sélection d'une ou plusieurs plages temporelles du type précité, en particulier lorsque de telles plages temporelles correspondent à des durées de transmission estimées qui sont minimales ou inférieures à une durée seuil, prédéterminée.

D'autres caractéristiques et avantages de l'invention apparaîtront à l'examen de la description détaillée ci-après et des dessins annexés sur lesquels :
- la figure 1 représente schématiquement un système pour la communication de données entre un terminal mobile et un serveur, agencés pour communiquer respectivement avec un réseau local et un réseau distant, reliés par une passerelle PR ;
- les figures 2A et 2B représéntent, à titre illustratif, des durées statistiques de transmission de données (en ordonnées) respectivement par le serveur distant et par le réseau local, pour différents moments d'une journée (en abscisses) et pour différentes quantités standard de données à transmettre Q1, Q2 et Q3 (respectivement en traits alternés, en traits pleins et en traits pointillés) ;
- la figure 3A représente, à titre illustratif, des durées estimées de transmission d'une quantité évaluée Q de données à transmettre par le serveur distant, en tenant compte d'un décalage horaire DH entre les positions géographiques respectives du réseau distant et du réseau local ;
- la figure 3B représente, à titre illustratif, les durées estimées dé transmission de données (en ordonnées) entre le serveur et le terminal mobile, pour différents moments d'une journée (en abscisses) et pour la quantité évaluée Q de données à transmettre ;
- la figure 4A représente, à titre illustratif, des tarifs de communication (en ordonnées) d'un opérateur du réseau local, pour différents moments d'une journée (en abscisses) ;
- la figure 4B représente, à titre illustratif, le coût total estimé (en ordonnées) d'une communication pour transmettre la quantité de données Q entre le serveur et le terminal mobile, pour différents moments d'une journée (en abscisses) ; et
- la figure 5 représente, dans un mode de réalisation préféré, des étapes successives d'un procédé d'estimation de la durée et/ou d'un coût d'une transmission de données au sens de la présente invention.

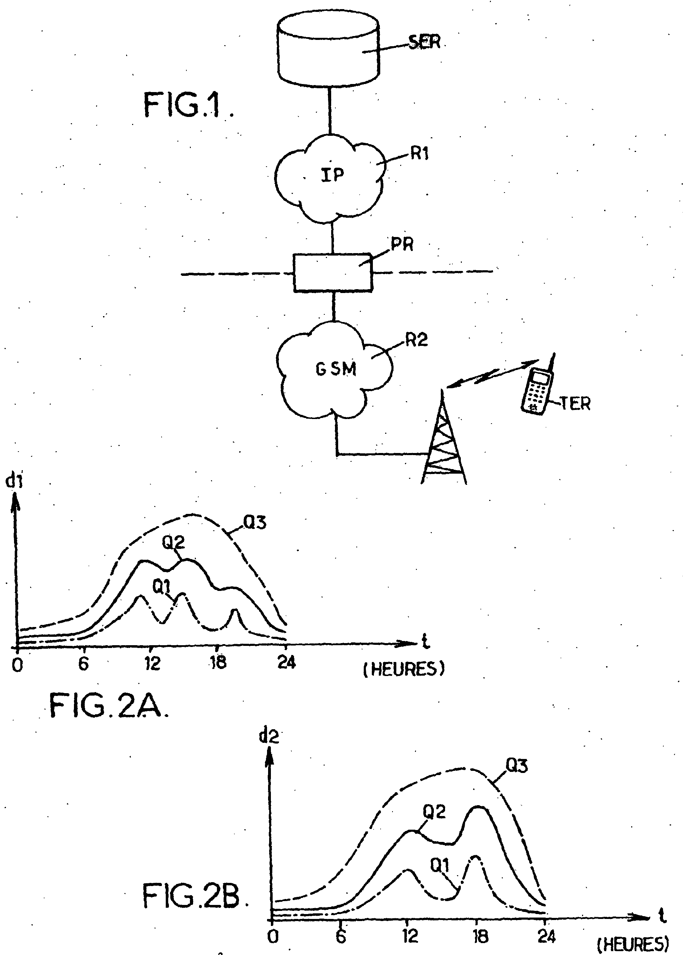

On se réfère tout d'abord à la figure 1, sur laquelle un terminal mobile TER est apte à communiquer avec un réseau local R2, relié à un réseau distant R1, par l'intermédiaire d'une passerelle PR, le réseau distant R1 étant apte à communiquer avec un serveur SER, ce qui permet d'établir une communication, en particulier pour le téléchargement de données, entre le serveur SER et le terminal TER. Dans l'exemple décrit, le terminal TER peut être un téléphone mobile, ou encore un assistant personnel PDA (pour "*Personal Digital Assistant*"). Dans l'exemple décrit, le réseau local R2 est un réseau radiofréquence, de type GSM, ou encore GPRS (réseau à connexion permanente permettant la transmission des données par paquets). Dans l'exemple décrit, le réseau distant R1 est un réseau IP (notamment pour des applications Internet), ou encore un réseau ATM (réseau commuté). En particulier, dans une réalisation avantageuse, on utilise un réseau IP, selon la version 6, en tant que réseau distant, cette version sophistiquée permettant de prévoir la durée d'une communication à travers le réseau R1 en fonction d'une quantité évaluée au préalable de données à transmettre. Les deux réseaux, local R2 et distant R1, sont, en pratique, reliés par une pluralité d'équipements de commutation ou de routage, le réseau distant IP comprenant lui-même une pluralité de routeurs IP. A titre illustratif, on comprendra que le système formé par les deux réseaux peut être interprété comme étant divisé en deux parties, une partie pour la communication avec le terminal TER, l'autre partie pour la communication avec le serveur SER, ces deux parties étant reliées par la passerelle PR.

Dans l'exemple donné de la présente description, un utilisateur du terminal TER est abonné à un service de téléchargement de données pour envoyer au serveur SER des données (des courriers électroniques par exemple de type e-mail, SMS (pour "*Short Message Service*"*)* ou MMS (pour "*Multimedia Message Service*"), ou encore des images ou des séquences animées). Le terminal TER transmet en outré au serveur SER l'identifiant d'un destinataire auquel -sont adressées de telles données (notamment dans le cas d'un courrier e-mail ou autre). Le serveur SER retransmettra ces données ensuite au destinataire indiqué. En variante ou en complément, le serveur SER peut transmettre, lui-même, des données au terminal TER (par exemple, des courriers électroniques destinés à l'utilisateur du terminal TER, des fichiers encodés codés au format MP3 pour l'audition de morceaux de musique, ou encore pour toute autre application telle que des jeux en réseau).

Pendant le téléchargement de telles données, le terminal mobile TER est en communication avec le serveur SER, par l'intermédiaire des deux réseaux, local R2 et distant R1, ces deux réseaux étant reliés par la passerelle PR. Deux types de facturation peuvent être prévus lors de la mise en oeuvre d'un tel service :
- la communication peut être facturée à la durée : dans ce cas, l'utilisateur souhaitera que cette communication s'effectue à un moment privilégié pendant lequel la durée - de cette communication sera minimale ; ou
- la facturation ne tient pas compte de la durée de la communication, mais de la quantité de données transmises : dans ce cas, l'utilisateur du terminal, bien que n'ayant aucune contrainte de coût peut néanmoins préférer une durée de transmission de données plus courte.

En principe, cette durée de transmission dépend des taux d'occupation (ou de congestion) du réseau local et du réseau distant. C'est ainsi que, par exemple, pour le réseau IP R1, distant, la durée de transmission des données peut être d'autant plus grande que le taux de congestion du réseau IP est important. En particulier, ces durées de transmission peuvent, pour une même quantité de données à transmettre, varier suivant les heures de la journée auxquelles il est décidé d'effectuer une telle transmission. Ainsi, une journée complète de vingt quatre heures peut être découpée selon des tranches horaires correspondant à des "*heures pleines*" qui correspondent à un taux d'occupation élevé du réseau, avec des durées de transmission relativement importantes, et des "*heures creuses*" qui correspondent à des taux d'occupation bas, avec des durées de transmission plus courtes, pour une même quantité Q de données à transmettre.

Sur la figure 2A sont représentées, à titre illustratif, des variations journalières statistiques de durée de transmission d1 par le réseau distant R₁, de différentes quantités standard, croissantes, respectivement Q1, Q2 et Q3. Dans l'exemple de la figure 2A, Q1 peut représenter une quantité de données de l'ordre de 500 octets, Q2, une quantité de données de l'ordre de 5 Ko et Q3, une quantité de données de l'ordre de 50 Ko. On constate, pour la petite quantité de données Q1, des pics plus marqués (suivant les heures de la journée) que les variations de la durée d1 pour la quantité de données plus importante Q3. Ainsi, on comprendra que la transmission d'une quantité importante Q3 de données peut nécessiter plus d'une heure de transmission et "*intégrer*" ainsi les variations de durée de transmission de quantités plus petites. On constate néanmoins que la tranche horaire de minuit à six heures du matin correspond toujours à une tranche "*heures creuses*".

Préférentiellement, les valeurs de telles durées d1 sont obtenues statistiquement pour les différentes quantités de données standard Q1 à Q3. Dans une variante plus sophistiquée, pour ce qui concerne le réseau relié au serveur R1, l'information de la durée de transmission peut être obtenue de façon précise et en temps réel, en particulier dans le cas où le réseau R1 est un réseau ATM ou encore un réseau IP, selon la version 6 (par mesure directe).

En se référant maintenant à la figure 2B, on constate que les durées de transmission d2 par le réseau local R2 (de type GSM ou autre) présentent des variations statistiques journalières différentes pour les quantités de données standard à transmettre Q1 à Q3. On comprendra ainsi que les taux d'occupation des deux réseaux, de natures différentes, ne présentent pas forcément les mêmes variations journalières, du fait que leurs utilisations respectives sont différentes. Néanmoins, on constate sur la figure 2B, que la tranche horaire de minuit à six heures du matin correspond toujours à des "*heures creuses*"*.*

On pourrait ainsi comprendre que, pour la transmission d'une quantité de données importante, il conviendra- d'établir la connexion dans la tranche horaire comprise entre minuit et six heures du matin, de manière à minimiser les durées de transmission et/ou les coûts de communication.

Néanmoins, si les deux réseaux, local R2 et distant R1, sont séparés géographiquement d'une distance telle qu'il existe un décalage horaire entre la position du terminal mobile et la position du serveur, le choix de cette plage horaire minuit-six heures (heures creuses) n'est plus justifié. De même, si l'utilisateur souhaite télécharger des données, en urgence, d'autres plages horaires de téléchargement de données peuvent être préférées et ce, même si le serveur et le terminal mobile se situent dans une même région géographique ou un même pays.

Dans ce qui suit, on décrit la sélection de plages horaires optimales, correspondant à des durées de transmission plus courtes, entre un serveur et un terminal mobile séparés d'une distance géographique impliquant un décalage horaire.

Dans une réalisation avantageuse, le terminal mobile transmet tout d'abord au serveur un message de demande de téléchargement d'un fichier. Au niveau du serveur, on évalue la quantité de données Q à transmettre, en fonction de la taille mémoire du fichier demandé. Le message de demande de téléchargement de données comprend en outre une indication de la position géographique du terminal mobile. En fonction de cette position géographique, le serveur estime un décalage horaire DH entre le réseau local et le réseau distant. On prévoit en outre, au niveau du serveur, une base de données comprenant une multiplicité de relevés statistiques journaliers des variations de durée de transmission, en fonction de différentes quantités de données à transmettre, pour le réseau distant R1, d'une part, et pour différents réseaux locaux R2, d'autre part, avec lesquels le terminal peut communiquer. En fonction de la position géographique du terminal mobile indiquée dans les messages de demande de téléchargement de données, on sélectionne dans la base de données, au niveau du serveur, une ou plusieurs variations statistiques journalières de la durée de transmission d2 correspondant à un réseau local R2 ou plusieurs autres réseaux locaux R2, auxquels le terminal mobile peut se connecter. Parmi ces variations statistiques journalières, on sélectionne celles obtenues pour une quantité standard de données à transmettre, proche de la quantité évaluée correspondant à la transmission du fichier demandé. Par exemple, en se référant à la figure 2A, si le nombre d'octets que comporte le fichier à télécharger est de l'ordre de quelques ko, les variations pour la quantité standard Q2 constitueront une bonne approximation des durées statistiques journalières de la quantité de données à transmettre Q. Dans une variante plus sophistiquée, on peut estimer les durées de transmission journalière de la quantité Q, en fonction d'une combinaison linéaire de deux variations statistiques d1ᵢ et d1ᵢ₊₁ pour des quantités respectives de données standard Qᵢ et Qᵢ₊₁, avec Qᵢ ≤ Q ≤ Qᵢ₊₁. Dans ce cas, les durées de transmission estimées d1 pour la quantité Q peuvent être déduites d'une expression de type d1=[(Q-Qᵢ)d1ᵢ + (Qᵢ₊₁-Q)d1ᵢ₊₁] / (Qᵢ₊₁-Qᵢ).

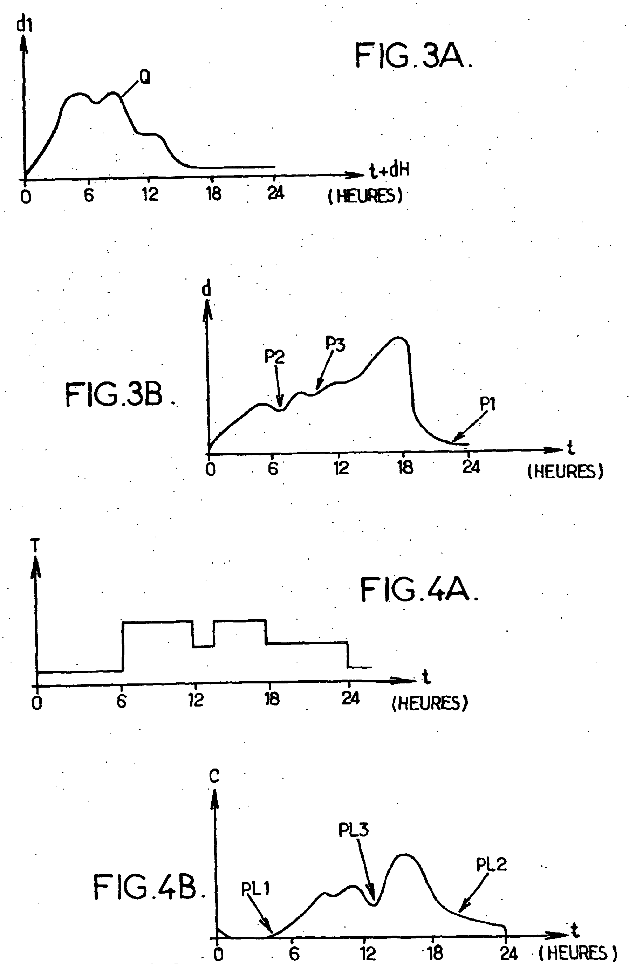

De même, on estimé, par approximation ou par combinaison linéaire, des durées de transmission journalière de la quantité évaluée Q, pour une transmission par le réseau distant R1, comme le montre la figure 3A, en tenant compte d'un décalage horaire DH au lieu géographique où se situe le terminal mobile TER.

En se référant à la figure 3B, les variations journalières des durées d1 et d2, pour la même quantité de données à transmettre Q, sont additionnées et la durée totale d du téléchargement, du serveur jusqu'au terminal mobile, en fonction des différentes heures de la journée, fait apparaître des minima de durée P1, P2, P3. On comprendra ainsi que si la quantité de données Q est transmise à ces instants P1, P2 ou P3, la durée totale de transmission d sera minimale.

Si l'utilisateur souhaite en outre minimiser les coûts de transmission, la base de données comprend différentes tranches horaires de tarification selon l'opérateur local (propriétaire du réseau local) que l'utilisateur du terminal peut choisir. Pour chaque variation de tarification T et pour chaque durée de transmission d (obtenue à partir des durées de transmission standard d2), on estime un coût C global de la communication, sensiblement par multiplication de la variation de la tarification T et de la variation de la durée totale d précitée . En se référant ainsi à la figure 4B, on constate des minima du coût global C de la communication, ces minima étant référencés PL1, PL2 et PL3. Par exemple, la plage horaire PL3 (autour de treize heures) devient un meilleur candidat, en matière de coût de communication, que la plage P3 (autour de dix heures) représentée sur la figure 3B, et pour laquelle, pourtant, la durée de communication d correspond à un minimum.

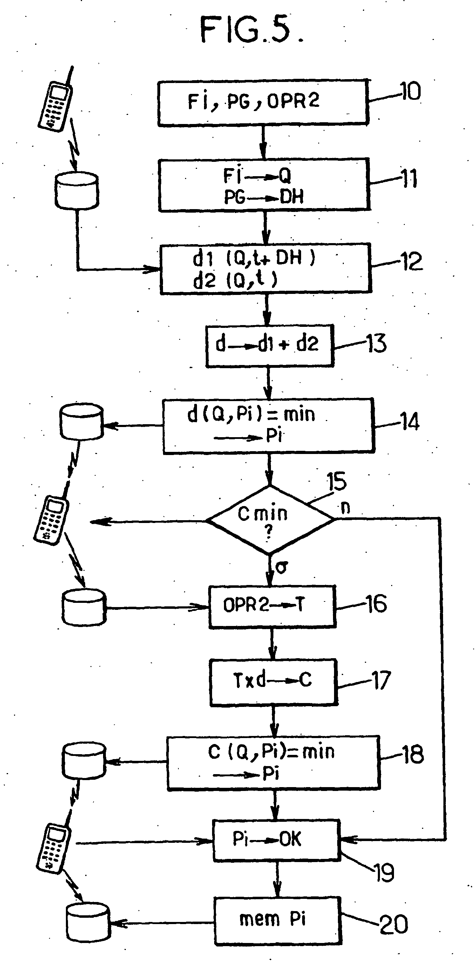

On se réfère maintenant à la figure 5 pour décrire les différentes étapes d'un procédé au sens de la présente invention, permettant de choisir un instant de transmission privilégié pour réduire les durées et/ou coûts de communication.

A la première étape 10, le terminal transmet un message de demande de téléchargement d'un fichier FI, en indiquant sa position géographique et, le cas échéant, un opérateur local propriétaire du réseau local R2, par lequel il souhaite recevoir les données du fichier FI. En variante et comme indiqué ci-avant, le serveur détermine, en fonction de la position géographique PG du terminal mobile, au moins un opérateur local OPR2, propriétaire du réseau local avec lequel le terminal mobile peut communiquer. A l'étape 11, le serveur estime, en fonction des caractéristiques du fichier FI demandé, la quantité de données Q à transmettre. En fonction de la position géographique PG du terminal mobile, le serveur estime aussi un décalage horaire DH entre la position géographique du réseau local et celle du réseau distant. Il permet aussi la remise à l'heure locale du terminal. A l'étape 12, le serveur sélectionne dans une base de données des variations statistiques journalières des durées de transmission, les variations journalières estimées pour la quantité de données Q (correspondant à la taille mémoire du fichier FI), dans le réseau local R2 (d2) et dans le réseau distant R1 (d1), en tenant compte du décalage horaire DH du réseau distant R1, par rapport au réseau local R2. A l'étape 13, on obtient les variations journalières estimées de la durée globale d (avec d = d1+d2), pour cette quantité de données Q à transmettre.

A l'étape 14, le serveur envoie au terminal un message lui indiquant des plages temporelles Pi correspondant aux plages P1, P2 et P3 de la figure 3B, pour lesquelles les durées de téléchargement d sont minimales.

Le serveur transmet en outre un message demandant à l'utilisateur du terminal s'il souhaite une communication à un coût minimal (étape 15). Si l'utilisateur ne souhaite finalement qu'une durée de transmission courte (par exemple si l'utilisateur bénéficie d'un abonnement à un service de téléchargement facturé à la quantité de données transmises et non à la durée de la communication), il indique par un message de réponse qu'il ne recherche pas un coût minimum de communication et qu'il requiert que la communication s'effectue à une plage horaire Pi qu'il aura choisie (étape 19). A l'étape suivante (étape 20), le serveur, dès réception de ce message de réponse, mémorise l'instant sélectionné Pi et la communication sera établie à cet instant Pi pour télécharger les données demandées par l'utilisateur du terminal. Le cas échéant, le serveur renverra un message d'accusé de réception lui indiquant que la communication sera établie à l'instant Pi et que l'utilisateur devra laisser son terminal mobile prêt à la connexion, à cet instant Pi.

Si l'utilisateur du terminal souhaite en particulier minimiser le coût global C de la communication, le serveur, à l'étape 16, interroge la base de données précitée pour obtenir les tarifs horaires de communication T des opérateurs des réseaux locaux avec lesquels le terminal mobile peut communiquer. A l'étape 17, le serveur estime des variations journalières du coût global de communication C et détermine, à l'étape 18, les plages horaires Pi (correspondant à PL1, PL2 et PL3 de la figure 4B), pour lesquelles le coût global de communication est minimal. Dans ce cas, le procédé se poursuit à l'étape 19 par la sélection, de la part de l'utilisateur, d'un instant Pi de début de connexion pour commencer la transmission des données à télécharger.

Bien entendu, si l'utilisateur du terminal souhaite un téléchargement d'urgence, il peut envoyer un message de réponse au serveur pour lui indiquer qu'il souhaite un téléchargement immédiat. On comprendra ainsi que le serveur envoie, en réponse à la demande de téléchargement, un message sous la forme d'un questionnaire invitant l'utilisateur du terminal à indiquer :
- s'il souhaite un téléchargement imanédiat ou différé ;
- si sa contrainte majeure est la durée de la communication ou le coût global de la communication ; ou encore
- s'il souhaite que le téléchargement des données s'effectue par des blocs successifs espacés dans le temps (par exemple, les plages PL1, PL3 et PL2 de la figure 4B) pour minimiser le coût global de la communication.
   Dans ce dernier cas, l'utilisateur du terminal doit préparer le terminal mobile pour qu'il soit prêt à la connexion aux différents instants sélectionnés.

Dans une réalisation avantageuse, le terminal mobile est capable de communiquer avec le serveur en utilisant différents moyens de communication (par exemple en utilisant le réseau GSM pour transmettre les données sous forme de message SMS, ou en utilisant le réseau UMTS pour transmettre les données sous forme de message MMS, ou encore en utilisant le protocole WAP (pour "*Wireless Application Protocol*") pour transmettre les données sous forme de courriers e-mails). Avantageusement, on sélectionne en outre au moins une plage temporelle Pi pour chaque moyen de communication du type ci-avant, en vue de choisir le moyen de communication le plus adapté pour réduire la durée et/ou le coût de la communication.

Bien entendu, la présente invention ne se limite pas à la forme de réalisation décrite ci-avant à titre d'exemple ; elle s'étend à d'autres variantes.

Ainsi, on comprendra que, en variante de la recherche de minima des durées de transmission d ou du coût global de communication C, on peut déterminer des plages temporelles pour lesquelles de telles durées d ou de tels coûts de communication C sont inférieurs à des seuils prédéterminés, choisis par exemple par l'utilisateur dans le questionnaire proposé par le serveur.

On a décrit ci-avant un calcul de la durée globale estimée, pour une quantité Q de données à transmettre, en fonction de plusieurs heures de la journée. En variante de ce calcul, il peut être prévu de commander le serveur pour qu'il mémorise, à la fin des communications, la durée totale de la communication, pour la quantité de données Q qui a été effectivement téléchargée, ce qui permet d'enrichir la base de données. Ainsi, plutôt que d'obtenir des statistiques séparées .pour le réseau local, d'une part, et pour le réseau distant, d'autre part, la base de données peut fournir des statistiques de durée de communication globale, pour plusieurs quantités standard dé données transmises, pour différents réseaux locaux et dans différents pays dans le monde. De la même manière, pour le coût global des communications, le serveur a, en principe, accès aux coûts globaux de communications, facturées à l'utilisateur du terminal mobile. Le serveur peut ainsi enrichir la base de données pour obtenir des variations statistiques journalières de coûts de communications, pour différents réseaux locaux et pour différents pays dans le monde.

Bien entendu, la présente invention s'applique aussi avantageusement à l'estimation d'une durée de téléchargement et d'un coût global de communication entre un terminal mobile et un serveur situés géographiquement dans un même pays. Dans ce cas encore, on estime des minima de durée de communication d et de coût global de communication C, comme indiqué ci-avant, mais sans tenir compte d'un décalage horaire.

La présente invention s'applique avantageusement aussi à l'estimation de la durée d'une communication et de son coût global lorsque le terminal mobile est agencé pour communiquer avec plusieurs serveurs distants, situés, le cas échéant, dans différents pays du monde. Dans ce cas, on obtient des variations statistiques journalières d'une durée de transmission pour différents réseaux IP distants, et l'utilisateur du terminal mobile peut avantageusement choisir une plage horaire pour le téléchargement de données à partir de l'un de ces réseaux distants.

Dans l'exemple décrit ci-avant, le terminal mobile reçoit du serveur une quantité de données demandées. Bien entendu, la sélection d'un instant de communication privilégié s'effectue sensiblement de la même manière lorsque l'utilisateur souhaite envoyer des données de son terminal vers le serveur.

## Revendications

1. Procédé de transmission de données entre un terminal mobile et un serveur, respectivement agencés pour communiquer avec un réseau local et avec un réseau distant, comprenant :
a) une étape d'évaluation d'une quantité de données à transmettre entre le terminal mobile et le serveur via les réseaux local et distant,
b) une étape d'estimation d'une variation journalière d'une durée globale (d) de transmission de cette quantité de données,
c) une étape de sélection, dans ladite variation journalière de la durée globale de transmission, d'au moins une plage temporelle, en vue de transmettre ladite quantité de données pendant ladite plage temporelle,
**caractérisé en ce que** l'étape b) d'estimation est menée :
* en fonction d'estimations de variations journalières respectives de durée de transmission de la quantité de données via le réseau local (d2), d'une part, et via le réseau distant (d1), d'autre part, et
* en tenant compte d'un décalage horaire éventuel entre des positions géographiques respectives du réseau local et du réseau distant.

2. Procédé selon la revendication 1, dans lequel ladite plage sélectionnée à l'étape c) correspond à un minimum dans ladite variation journalière de la durée globale.

3. Procédé selon la revendication 1, dans lequel la durée estimée à l'étape b) est inférieure à une durée seuil prédéterminée sur ladite plage temporelle sélectionnée à l'étape c).

4. Procédé selon l'une des revendications 1 à 3, dans lequel, pour la mise en oeuvre de l'étape b), on obtient au préalable des données statistiques de durées de transmission, pour plusieurs quantités standard de données et pour plusieurs moments d'une journée, et dans lequel, à l'étape b), on estime une approximation des durées de transmission pour plusieurs moments d'une journée et pour ladite quantité de données évaluée à l'étape a), en fonction des durées de transmission d'au moins une quantité standard, proche de la quantité évaluée.

5. Procédé selon la revendication 4, dans lequel, le terminal mobile étant capable de communiquer avec une pluralité de réseaux locaux, on obtient lesdites données statistiques de durées de transmission pour ladite pluralité de réseaux locaux et pour le réseau distant.

6. Procédé selon l'une des revendications 1 à 5, le terminal mobile étant capable de communiquer avec une pluralité de réseaux locaux appartenant à des opérateurs locaux respectifs, le procédé comportant les étapes suivantes :
- estimation, en combinaison avec lesdites variations journalières à l'étape b), d'un coût global de communication pour ladite transmission des données, pour plusieurs moments successifs d'une journée, en fonction de coûts tarifaires proposés par chaque opérateur local,
- et sélection à l'étape c), en fonction dudit coût global de communication pour plusieurs moments successifs d'une journée, d'au moins une plage temporelle parmi lesdits moments d'une journée.

7. Procédé selon l'une des revendications 1 à 6, dans lequel :
- préalablement à l'étape a), le serveur reçoit du terminal un message de demande de transmission de données comportant une indication relative à la quantité de données à transmettre,
- et, après l'étape c), le serveur envoie, en retour, un message de proposition comprenant une sélection d'une ou plusieurs plages horaires, ce qui permet à un utilisateur du terminal de choisir, parmi ladite sélection, un instant de début de transmission.

8. Procédé selon la revendication 7, dans lequel le terminal renvoie au serveur un message de confirmation comportant une indication relative à un instant choisi de début de transmission, tandis que le serveur ou le terminal sont agencés pour amorcer ladite transmission de données sensiblement à l'instant choisi de début de transmission.

9. Procédé selon l'une des revendications 7 et 8, prises en combinaison avec la revendication 4, dans lequel on obtient lesdites données statistiques de durées de transmission, pour une pluralité de réseaux locaux dans une pluralité de pays, et dans lequel le message de demande de transmission de données comporte en outre une indication relative à une situation géographique du terminal.

10. Procédé selon l'une des revendications précédentes, dans lequel le terminal mobile est capable de communiquer avec le serveur en utilisant différents moyens de communication, et dans lequel on sélectionne en outre au moins une plage temporelle pour chaque moyen de communication.

11. Système de transmission de données, comportant :
- un terminal mobile (TER) relié à un réseau local (R1),
- un serveur (SER) relié à un réseau distant (R2), et
- une passerelle (PR) entre le réseau local et le réseau distant,
le système comportant des moyens adaptés pour :
a) évaluer une quantité de données à transmettre entre le terminal mobile et le serveur via les réseaux local et distant,
b) estimer une variation journalière d'une durée globale (d) de transmission de cette quantité de données,
c) sélectionner, dans ladite variation journalière de la durée globale de transmission, au moins une plage temporelle, en vue de transmettre ladite quantité de données pendant ladite plage temporelle,
**caractérisé en ce que** ladite estimation de variation journalière d'une durée globale (d) est menée :
* en fonction d'estimations de variations journalières respectives de durée de transmission de la quantité de données via le réseau local (d2), d'une part, et via le réseau distant (d1), d'autre part, et
* en tenant compte d'un décalage horaire éventuel entre des positions géographiques respectives du réseau local et du réseau distant.

12. Système selon la revendication 11, **caractérisé en ce que** lesdits moyens sont agencés auprès du serveur.

13. Serveur destiné à un système de transmission de données, le système comportant :
- un terminal mobile (TER) relié à un réseau local (R1),
- un réseau distant (R2) relié au serveur (SER), et
- une passerelle (PR) entre le réseau local et le réseau distant,
le serveur comportant des moyens adaptés pour :
a) évaluer une quantité de données à transmettre entre le terminal mobile et le serveur via les réseaux local et distant,
b) estimer une variation journalière d'une durée globale (d) de transmission de cette quantité de données,
c) sélectionner, dans ladite variation journalière de la durée globale de transmission, au moins une plage temporelle, en vue de transmettre ladite quantité de données pendant ladite plage temporelle,
**caractérisé en ce que** ladite estimation de variation journalière d'une durée globale (d) est menée :
* en fonction d'estimations de variations journalières respectives de durée de transmission de la quantité de données via le réseau local (d2), d'une part, et via le réseau distant (d1), d'autre part, et
* en tenant compte d'un décalage horaire éventuel entre des positions géographiques respectives du réseau local et du réseau distant.

14. Système selon la revendication 11, **caractérisé en ce que** le terminal comporte des moyens adaptés pour :
- communiquer au serveur une requête de téléchargement avec une indication de position géographique du terminal,
- recevoir du serveur un message indiquant des plages temporelles pour lesquelles les durées de téléchargement sont minimales et/ou le coût global de communication est minimum en fonction de ladite position géographique,
- émettre vers le serveur un message de réponse comportant le choix par un utilisateur du terminal de l'une au moins desdites plages temporelles.

## Patentansprüche

1. Verfahren zur Übertagung von Daten zwischen einem mobilen Terminal und einem Server, die jeweils ausgebildet sind, um mit einem örtlichen Netz und mit einem entfernten Netz zu kommunizieren, umfassend:
a) einen Schritt der Ermittlung einer zwischen dem mobilen Terminal und dem Server über das örtliche und das entfernte Netz zu übertragenden Datenmenge,
b) einen Schritt der Schätzung einer täglichen Änderung einer Gesamtübertragungszeit (d) dieser Datenmenge,
c) einen Schritt der Wahl mindestens eines Zeitbereichs in dieser täglichen Änderung der Gesamtübertragungszeit, um diese Datenmenge während dieses Zeitbereichs zu übertragen, **dadurch gekennzeichnet, dass** der Schritt b) der Schätzung
* in Abhängigkeit von Schätzungen von jeweiligen täglichen Änderungen der Übertragungszeit der Datenmenge über das örtliche Netz (d2) einerseits und über das entfernte Netz (d1) andererseits und
* unter Berücksichtigung einer eventuellen Zeitverschiebung zwischen geographischen Lagen des örtlichen Netzes bzw. des entfernten Netzes
durchgeführt wird.

2. Verfahren nach Anspruch 1, bei dem der im Schritt c) ausgewählte Bereich einem Minimum in der täglichen Änderung der Gesamtzeit entspricht.

3. Verfahren nach Anspruch 1, bei dem die im Schritt b) geschätzte Zeit kleiner als eine vorbestimmte Schwellenzeit auf dem im Schritt c) ausgewählten Zeitbereich ist.

4. Verfahren nach einem der Ansprüche 1 bis 3, bei dem man für die Durchführung des Schritts b) zuvor statistische Daten von Übertragungszeiten für mehrere Standard-Datenmengen und für mehrere Zeitpunkte eines Tags erhält und bei dem man im Schritt b) eine Annäherung der Übertragungszeiten für mehrere Zeitpunkte eines Tags und für die im Schritt a) ermittelte Datenmenge in Abhängigkeit von den Übertragungszeiten mindestens einer Standardmenge, die der ermittelten Menge nahe ist, schätzt.

5. Verfahren nach Anspruch 4, bei dem man, wenn der mobile Terminal in der Lage ist, mit einer Vielzahl von örtlichen Netzen zu kommunizieren, diese statistischen Daten von Übertragungszeiten für diese Vielzahl von örtlichen Netzen und für das entfernte Netz erhält.

6. Verfahren nach einem der Ansprüche 1 bis 5, bei dem, wenn der mobile Terminal in der Lage ist, mit einer Vielzahl von örtlichen Netzen zu kommunizieren, die zu jeweiligen örtlichen Operatoren gehören, das Verfahren die folgenden Schritte umfasst:
- Schätzung, in Kombination mit diesen täglichen Änderungen im Schritt b), eines Gesamtkommunikationspreises für diese Datenübertragung für mehrer aufeinanderfolgende Zeitpunkte eines Tags in Abhängigkeit von von jedem örtlichen Operator vorgeschlagenen Tarifpreisen,
- und Wahl im Schritt c), in Abhängigkeit von diesem Gesamtkommunikationspreis für mehrere aufeinanderfolgende Zeitpunkte eines Tags, mindestens eines Zeitbereichs aus diesen Zeitpunkten eines Tags.

7. Verfahren nach einem der Ansprüche 1 bis 6, bei dem:
- der Server vor dem Schritt a) vom Terminal eine Datenübertragungsanforderungs-Mitteilung erhält, die eine Angabe über die zu übertragende Datenmenge umfasst,
- und der Server nach dem Schritt c) eine Vorschlags-Mitteilung zurücksendet, die eine Wahl eines oder mehrerer Uhrzeitbereiche umfasst, was einem Benutzer des Terminals gestattet, aus dieser Wahl einen Übertragungsbeginnzeitpunkt auszuwählen.

8. Verfahren nach Anspruch 7, bei dem der Terminal dem Server eine Bestätigungsmitteilung sendet, die eine Angabe über einen gewählten Übertragungsbeginnzeitpunkt umfasst, während der Server oder der Terminal ausgebildet sind, um diese Datenübertragung im Wesentlichen zu dem gewählten Übertragungsbeginnzeitpunkt auszulösen.

9. Verfahren nach einem der Ansprüche 7 und 8 in Kombination mit Anspruch 4, bei dem man die statistischen Daten von Übertragungszeiten für eine Vielzahl von örtlichen Netzen in einer Vielzahl von Ländern erhält und bei dem die Datenübertragungsanforderungs-Meldung außerdem eine Angabe über eine geographische Lage des Terminals umfasst.

10. Verfahren nach einem der vorhergehenden Ansprüche, bei dem der mobile Terminal in der Lage ist, mit dem Server unter Verwendung von verschiedenen Kommunikationsmittel zu kommunizieren, und bei dem man außerdem mindestens einen Zeitbereich für jedes Kommunikationsmittel auswählt.

11. Datenübertragungssystem, umfassend:
- einen mobilen Terminal (TER), der mit einem örtlichen Netz (R1) verbunden ist,
- einen Server (SER), der mit einem entfernten Netz (R2) verbunden ist, und
- eine Brücke (PR) zwischen dem örtlichen Netz und dem entfernten Netz,
wobei das System Mittel umfasst, die dafür ausgelegt sind,
a) eine Datenmenge, die zwischen dem mobilen Terminal und dem Server über das örtliche und das entfernte Netz zu übertragen ist, zu ermitteln,
b) eine tägliche Änderung einer Gesamtzeit (d) der Übertragung dieser Datenmenge zu schätzen,
c) in dieser täglichen Änderung Gesamtübertragungszeit mindestens einen Zeitbereich auszuwählen, um diese Datenmenge während dieses Zeitbereichs zu übertragen, **dadurch gekennzeichnet, dass** diese Schätzung der täglichen Änderung einer Gesamtzeit (d)
* in Abhängigkeit von Schätzungen von jeweiligen täglichen Änderungen der Zeit der Übertragung der Datenmenge über das örtliche Netz (d2) einerseits und über das entfernte Netz (d1) andererseits und
* unter Berücksichtigung einer eventuellen Zeitverschiebung zwischen geographischen Lagen des örtlichen Netzes bzw. des entfernten Netzes
durchgeführt wird.

12. System nach Anspruch 11, **dadurch gekennzeichnet, dass** diese Mittel bei dem Server angeordnet sind.

13. Server, der für ein Datenübertragungssystem bestimmt ist, wobei das System umfasst:
- einen mobilen Terminal (TER), der mit einem örtlichen Netz (R1) verbunden ist,
- ein entferntes Netz (R2), das mit dem Server (SER) verbunden ist, und
- eine Brücke (PR) zwischen dem örtlichen Netz und dem entfernten Netz,
wobei der Server Mittel umfasst, die dafür ausgelegt sind,
a) eine Datenmenge, die zwischen dem mobilen Terminal und dem Server über das örtliche und das entfernte Netz zu übertragen ist, zu ermitteln,
b) eine tägliche Änderung einer Gesamtzeit (d) der Übertragung dieser Datenmenge zu schätzen,
c) in dieser täglichen Änderung Gesamtübertragungszeit mindestens einen Zeitbereich auszuwählen, um diese Datenmenge während dieses Zeitbereichs zu übertragen, **dadurch gekennzeichnet, dass** diese Schätzung der täglichen Änderung einer Gesamtzeit (d)
* in Abhängigkeit von Schätzungen von täglichen Änderungen der Zeit der Übertragung der Datenmenge über das örtliche Netz (d2) einerseits und über das entfernte Netz (d1) andererseits und
* unter Berücksichtigung einer eventuellen Zeitverschiebung zwischen geographischen Lagen des örtlichen Netzes bzw. des entfernten Netzes
durchgeführt wird.

14. System nach Anspruch 11, **dadurch gekennzeichnet, dass** der Terminal Mittel umfasst, die dafür ausgelegt sind,
- dem Server eine Fernladungsanforderung mit einer Angabe der geographischen Lage des Terminals mitzuteilen,
- vom Server eine Mitteilung zu empfangen, die Zeitbereiche angibt, bei denen die die Fernladezeiten minimal sind und/oder der Gesamtkommunikationspreis in Abhängigkeit von dieser geographischen Lage minimal ist,
- zum Server eine Antwortmitteilung zu senden, die die Wahl mindestens eines dieser Zeitbereiche durch einen Benutzer des Terminals umfasst.

## Claims

1. Method for transmitting data between a mobile terminal and a server, arranged so as to communicate respectively with a local network and a remote network, comprising:
a) an evaluation stage for evaluating a quantity of data to be transmitted between the mobile terminal and the server via the local and remote networks,
b) an estimation stage for estimating a daily variation in a total transmission time (d) for transmitting this quantity of data,
c) a selection stage for selecting at least one time slot in said daily variation in the total transmission time, with a view to transmitting said quantity of data during said time slot,
**characterised in that** the estimation stage b) is carried out:
* as a function of estimations of respective daily variations in the transmission time for transmitting the quantity of data via the local network (d2) on the one hand and via the remote network (d1) on the other hand, and
* while allowing for a possible time difference between respective geographic locations of the local network and the remote network.

2. Method according to claim 1, in which said time slot selected in stage c) corresponds to a minimum in said daily variation in the total time.

3. Method according to claim 1, in which the time estimated in stage b) is less than a predetermined threshold time for said time slot selected in stage c).

4. Method according to any one of claims 1 to 3, in which, in order to carry out stage b), statistical data regarding transmission times is obtained beforehand for a plurality of standard quantities of data and for a plurality of times of day and in which, in stage b), an approximation of the transmission times is estimated for a plurality of times of day and for said quantity of data evaluated in stage a) as a function of transmission times for transmitting at least one standard quantity close to the evaluated quantity.

5. Method according to claim 4, in which, as the mobile terminal is capable of communicating with a plurality of local networks, said statistical data regarding transmission times for said plurality of local networks and for the remote network is obtained.

6. Method according to any one of claims 1 to 5, as the mobile terminal is capable of communicating with a plurality of local networks belonging to respective local operators, the method comprises the following stages:
- estimation, in combination with said daily variations in stage b), of a total communications cost for said data transmission for a plurality of successive times of day, as a function of the tariffs offered by each local operator,
- and selection in stage c) of at least one time slot from said times of day, as a function of said total communications cost for a plurality of successive times of day.

7. Method according to any one of claims 1 to 6, in which:
- prior to stage a), the server receives from the terminal a message requesting data transmission that includes an indication of the quantity of data to be transmitted,
- and, after stage c), the server sends back a proposal message that includes a selection of one or more time slots, enabling a terminal user to choose a moment for transmission to begin, from said selection.

8. Method according to claim 7, in which the terminal sends back to the server a confirmation message that includes information regarding a moment chosen for transmission to begin, while the server or terminal are adapted to initiate said transmission of data substantially at the moment chosen for transmission to begin.

9. Method according to either claim 7 or claim 8, combined with claim 4, in which said statistical data regarding transmission times is obtained for a plurality of local networks in a plurality of countries and in which the message for requesting data transmission also includes information regarding the geographic location of the terminal.

10. Method according to any one of the preceding claims, in which the mobile terminal is able to communicate with the server by using different means of communication and in which at least one time slot is also chosen for each means of communication.

11. Data transmission system, comprising:
- a mobile terminal (TER) connected to a local network (R1),
- a server (SER) connected to a remote network (R2), and
- a gateway (PR) between the local network and the remote network,
the system comprising means adapted to:
a) evaluate a quantity of data to be transmitted between the mobile terminal and the server via local and remote networks,
b) estimate a daily variation in total transmission time (d) for transmitting this quantity of data,
c) select at least one time slot, in said daily variation in the total transmission time, with a view to transmitting said quantity of data during said time slot,
**characterised in that** said estimation of the daily variation in a total time (d) is carried out:
* as a function of estimations of respective daily variations in the transmission time for transmitting the quantity of data via the local network (d2) on the one hand and via the remote network (d1) on the other hand, and
* while allowing for a possible time difference between respective geographic locations of the local network and the remote network.

12. System according to claim 11, **characterised in that** said means are arranged close to the server.

13. Server intended for a data transmission system, the system comprising:
- a mobile terminal (TER) connected to a local network (R1),
- a remote network (R2) connected to the server (SER), and
- a gateway (PR) between the local network and the remote network,
the server comprising means adapted to:
a) evaluate a quantity of data to be transmitted between the mobile terminal and the server via the local and remote networks,
b) estimate a daily variation in a total transmission time (d) for transmitting this quantity of data,
c) select at least one time slot in said daily variation in the total transmission time, with a view to transmitting said quantity of data during said time slot,
**characterised in that** said estimation of the daily variation in a total time (d) is carried out:
* as a function of an estimation of respective daily variations in transmission time for transmitting the quantity of data via the local network (d2) on the one hand and via the remote network (d1) on the other hand, and
* while allowing for a possible time difference between respective geographic locations of the local network and the remote network.

14. System according to claim 11, **characterised in that** the terminal comprises means adapted to:
- communicate a download request to the server with information regarding the geographic location of the terminal,
- receive a message from the server indicating time slots for which the download times are minimal and/or the total cost of communication is at a minimum as a function of said geographic location.
- transmit to the server a reply that includes the choice of at least one of said time slots by a terminal user.
